# EUROPEAN PATENT APPLICATION

(11) **EP 4 804 702 A1**
(43) Date of publication of application: **09.09.2026**
(21) Application number: 24886392.0
(22) Date of filing: 04.11.2024
(51) Int. Cl.: H04W 74/00, H04L 1/08, H04B 7/06, H04B 7/08, H04W 74/08

(54) **APPARATUS AND METHOD FOR PERFORMING PRACH REPEATED TRANSMISSIONS BY USING DIFFERENT BEAMS IN WIRELESS COMMUNICATION SYSTEM**

(30) Priority: 05.11.2023 US 202363547379 P
(71) Applicant: LG Electronics Inc., Yeongdeungpo-gu Seoul 07336 (KR)
(72) Inventor: SHIN, Seokmin, Seoul 06772 (KR); KO, Hyunsoo, Seoul 06772 (KR); YANG, Suckchel, Seoul 06772 (KR); NOH, Yujin, Seoul 06772 (KR); KIM, Seonwook, Seoul 06772 (KR)
(74) Representative: Plasseraud IP
(86) International application number: PCT/KR2024/017144
(87) International publication number: WO 2025/095722

(57) **Abstract**

According to various embodiments of the present disclosure, there is provided a method performed by a user equipment (UE) comprising receiving, from a base station, configuration information related to i) a random access channel (RACH) resource for a random access (RA) procedure and ii) one or more repetition number sets including multiple repetition numbers for physical random access channel (PRACH) repeated transmissions; determining, based on the configuration information, whether one repetition number set of the one or more repetition number sets, one repetition number of the multiple repetition numbers included in the repetition number set, and the PRACH repeated transmissions are based on different transmission beams or one same transmission beam; and performing the PRACH repeated transmissions corresponding to the determined repetition number based on the different transmission beams or the same transmission beam using the RACH resource. The different transmission beams are related to different synchronization signal blocks (SSBs) or different reference signals (RSs), and the same transmission beam is related to one SSB or one RS.

## Description

### [Technical Field]

The present disclosure relates to a wireless communication system. More particularly, the present disclosure relates to a device and method for performing physical random access channel (PRACH) repeated transmission using different beams in a wireless communication system.

### [Background Art]

In the Rel-18 coverage enhancement of the 3GPP standard specification, random access channel (RACH) occasion (RO) groups were introduced for PRACH repetition, and it was defined that RACH occasion (RO) groups were formed using only ROs located at the same frequency.

In addition, in terms of an increase in PRACH coverage, RO groups (i.e., set of valid ROs) were formed using only ROs associated with the same synchronization signal block (SSB) beam index. PRACH repetition using ROs associated with different SSB beam indices was also discussed but was not introduced. Therefore, if the PRACH repetition using ROs associated with different SSB beam indices is introduced in a subsequent release (e.g., Rel-19) of the 3GPP standard specification, it may be necessary to form RO groups using a method different from the currently introduced method.

Accordingly, the present disclosure proposes UE/base station operations required when multiple ROs associated with different SSB beam indices are included in an RO group for PRACH repetition. Although proposed methods and embodiments mentioned in the present disclosure propose to primarily target PRACH repetition using multiple ROs associated with different SSB beam indices, they can also be applied to PRACH repetition using multiple ROs associated with the same SSB beam index, and can also be applied to PRACH repetition, whose part consists of ROs associated with the same SSB beam index, and part consists of ROs associated with different SSB beam indices. PRACH repeated transmission using the same transmission (Tx) beam (or different Tx beams) mentioned in the present disclosure has the same meaning as PRACH repeated transmission using an RO group including ROs associated with the same SSB beam index (or different SSB beam indices). Further, a Tx beam direction of a UE mentioned in the present disclosure has the same meaning as a spatial filter of the UE. The RO group mentioned in the present disclosure has the same meaning as a set of ${N}_{preamble}^{rep}$ valid PRACH occasions in the 3GPP standard specification.

### [Disclosure]

### [Technical Problem]

To solve the above-described and other problems, the present disclosure provides a device and method for performing PRACH repeated transmission using different beams in a wireless communication system.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

### [Technical Solution]

According to various embodiments of the present disclosure, there is provided a method performed by a user equipment (UE) comprising receiving, from a base station, configuration information related to i) a random access channel (RACH) resource for a random access (RA) procedure and ii) one or more repetition number sets including multiple repetition numbers for physical random access channel (PRACH) repeated transmissions; determining, based on the configuration information, whether one repetition number set of the one or more repetition number sets, one repetition number of the multiple repetition numbers included in the repetition number set, and the PRACH repeated transmissions are based on different transmission beams or one same transmission beam; and performing the PRACH repeated transmissions corresponding to the determined repetition number based on the different transmission beams or the same transmission beam using the RACH resource. The different transmission beams are related to different synchronization signal blocks (SSBs) or different reference signals (RSs), and the same transmission beam is related to one SSB or one RS.

According to various embodiments of the present disclosure, there is provided a method performed by a base station comprising transmitting, to a user equipment (UE), configuration information related to i) a random access channel (RACH) resource for a random access (RA) procedure and ii) one or more repetition number sets including multiple repetition numbers for physical random access channel (PRACH) repeated transmissions, wherein based on the configuration information, it is determined whether one repetition number set of the one or more repetition number sets, one repetition number of the multiple repetition numbers included in the repetition number set, and the PRACH repeated transmissions are based on different transmission beams or one same transmission beam; and receiving, from the UE, the PRACH repeated transmissions corresponding to the determined repetition number based on the different transmission beams or the same transmission beam using the RACH resource. The different transmission beams are related to different synchronization signal blocks (SSBs) or different reference signals (RSs), and the same transmission beam is related to one SSB or one RS.

According to various embodiments of the present disclosure, there is provided a user equipment (UE) in a wireless communication system, the UE comprising a transceiver, at least one processor, and at least one memory operably connectable to the at least one processor and storing instructions performing operations based on being executed by the at least one processor, and the operations comprise all steps of a method of operating the UE according to various embodiments of the present disclosure.

According to various embodiments of the present disclosure, there is provided a base station in a wireless communication system, the base station comprising a transceiver, at least one processor, and at least one memory operably connectable to the at least one processor and storing instructions performing operations based on being executed by the at least one processor, and the operations comprise all steps of a method of operating the base station according to various embodiments of the present disclosure.

According to various embodiments of the present disclosure, there is provided a control device controlling a user equipment in a wireless communication system, the control device comprising at least one processor and at least one memory operably connected to the at least one processor, and the at least one memory stores instructions performing operations based on being executed by the at least one processor, and the operations comprise all steps of a method of operating the user equipment according to various embodiments of the present disclosure.

According to various embodiments of the present disclosure, there is provided a control device controlling a base station in a wireless communication system, the control device comprising at least one processor and at least one memory operably connected to the at least one processor, and the at least one memory stores instructions performing operations based on being executed by the at least one processor, and the operations comprise all steps of a method of operating the base station according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating a user equipment according to various embodiments of the present disclosure.

According to various embodiments of the present disclosure, there are provided one or more non-transitory computer readable mediums storing one or more instructions, and the one or more instructions perform operations based on being executed by one or more processors, and the operations comprise all steps of a method of operating the base station according to various embodiments of the present disclosure.

### [Advantageous Effects]

To solve the above-described and other problems, the present disclosure can provide a device and method for performing PRACH repeated transmission using different beams in a wireless communication system.

### [Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.
FIG. 1 illustrates physical channels used in a system applicable to the present disclosure and an example of a general signal transmission method using the physical channels.
FIG. 2 illustrates an example of a structure of a radio frame used in a system applicable to the present disclosure.
FIG. 3 illustrates an example of a slot structure used in a system applicable to the present disclosure.
FIG. 4 illustrates an example of a slot structure of a radio frame used in a system applicable to the present disclosure.
FIG. 5 illustrates an example of determining an RO group in a system applicable to the present disclosure.
FIG. 6 illustrates an example of determining an RO group in a system applicable to the present disclosure.
FIG. 7 illustrates an example of a process of operating a UE in a system applicable to the present disclosure.
FIG. 8 illustrates an example of a process of operating a base station in a system applicable to the present disclosure.
FIG. 9 illustrates an example of a structure of a first device and a second device in a system applicable to the present disclosure.

### [Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

### General Signal Transmission Method in 3GPP

### Physical Channels and General Signal Transmission

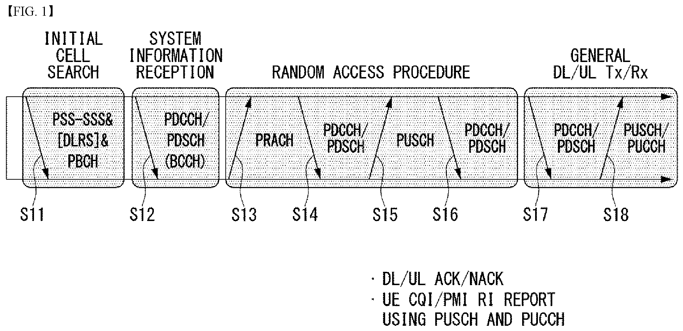

FIG. 1 illustrates physical channels used in a system applicable to the present disclosure and an example of a general signal transmission method using the physical channels. More specifically, FIG. 1 illustrates physical channels and general signal transmission used in the 3GPP system.

FIG. 1 illustrates physical channels and general signal transmission used in the 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) in S11. To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information, in S12.

Next, the UE may perform a random access procedure in order to complete an access to the base station, in S13 to S16. Specifically, the UE may transmit a preamble on a physical random access channel (PRACH) in S13, and receive a random access response (RAR) for the preamble on the PDCCH and the PDSCH corresponding to the PDCCH in S14. Thereafter, the UE may transmit a physical uplink shared channel (PUSCH) using scheduling information within the RAR in S15, and perform a contention resolution procedure such as the PDCCH and the PDSCH corresponding to the PDCCH in S16.

Next, the UE that performs the above-described procedure may perform PDCCH/PDSCH reception S17 and PUSCH/physical uplink control channel (PUCCH) transmission S18, as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

### Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

### Radio Frame Structure

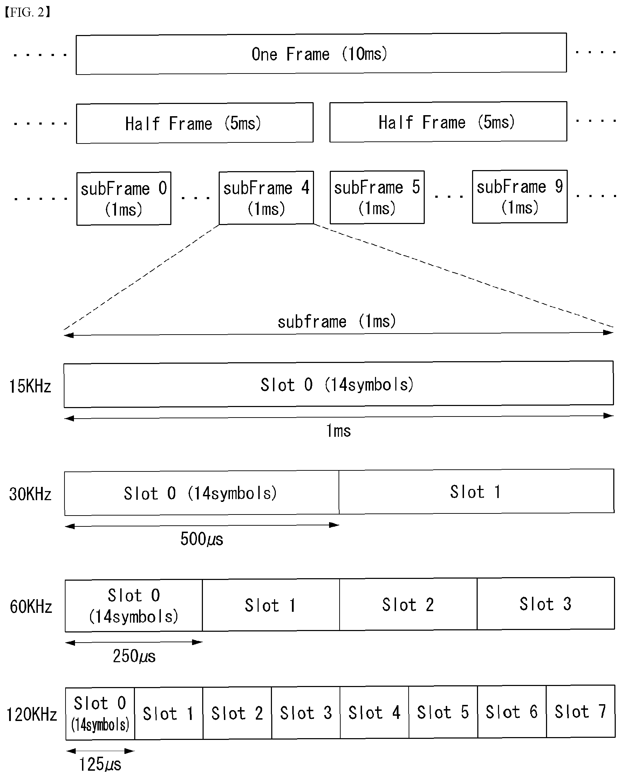

FIG. 2 illustrates an example of a structure of a radio frame used in a system applicable to the present disclosure.

In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).

Table 1 shows that when the normal CP is used, the number of symbols per slot, the number of slots per frame, and the number of slots per subframe vary depending on the SCS.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

N^{slot}_{symb} is the number of symbols in the slot. N^{frame,u}ₛₗₒₜ is the number of slots in the frame. N^{subframe,u}ₛₗₒₜ is the number of slots in the subframe.

Table 2 shows that when the extended CP is used, the number of symbols per slot, the number of slots per frame, and the number of slots per subframe vary depending on the SCS.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

The NR supports multiple numerologies (or subcarrier spacing (SCS)) for supporting diverse 5G services. For example, when the SCS is 15 kHz, a wide area in traditional cellular bands is supported, when the SCS is 30 kHz/60 kHz, dense-urban, lower latency, and wider carrier bandwidth are supported, and when the SCS is 60 kHz or more, a bandwidth larger than 24.25 GHz is supported to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

**[Table 3]**

| Frequency Range Designation | Corresponding Frequency Range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

**[Table 4]**

| Frequency Range Designation | Corresponding Frequency Range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

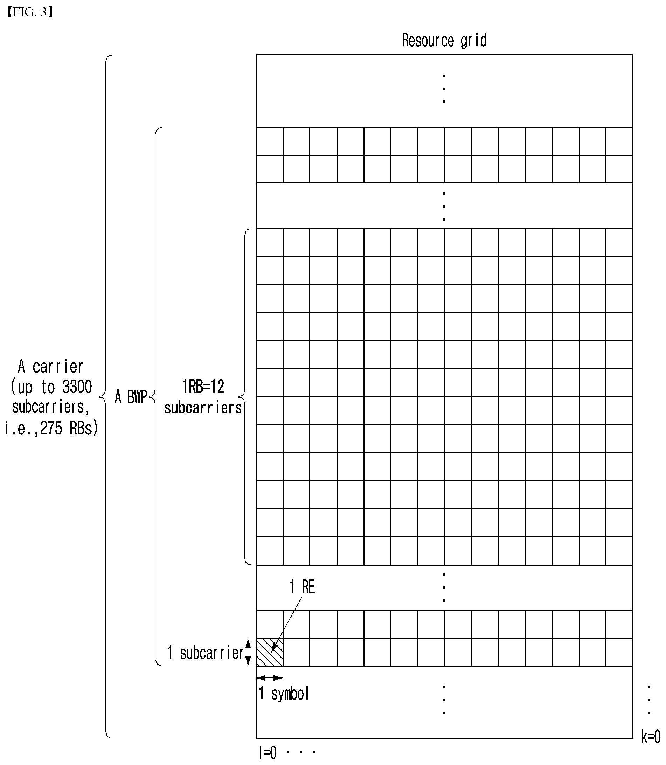

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

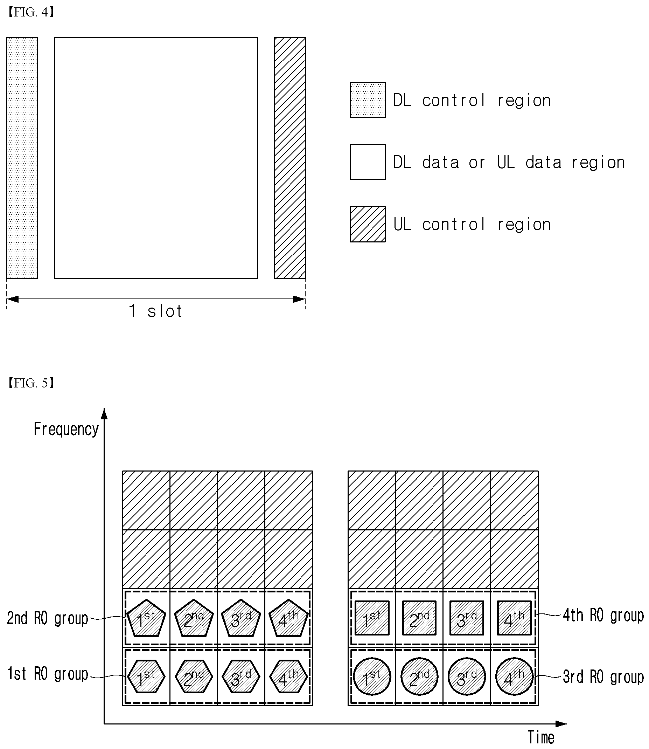

FIG. 4 illustrates an example of a slot structure of a radio frame used in a system applicable to the present disclosure.

More specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary. (e.g., DL control/DL data/UL control/UL data or UL control/UL data/DL control/DL data, etc.)

Physical random access channel (PRACH) repetition means that a UE repeatedly performs PRACH transmission in a random access procedure. The PRACH is a channel used when the UE requests network access from a base station, and the PRACH repetition is primarily used to ensure successful transmission of signals in areas with poor communication environments or wide coverage.
1. The purposes of PRACH Repetition are as follows:
   The primary purpose of PRACH repetition is to increase the likelihood of receiving a signal. If a PRACH signal is repeatedly transmitted, the probability of one or more successful transmissions increases, even if there is interference or noise in a communication path between a UE and a base station. The PRACH repetition is particularly useful in the following situations:
   (1) Weak signal environment: When a signal strength is weak due to high-density buildings in urban areas, long distances, or communication indoors
   (2) Long distance between the base station and the UE: When the UE is far from the base station in a wide coverage area
   (3) Interference or channel quality degradation: When there is severe interference from surrounding communication signals
2. An operation method of PRACH Repetition is as follows:
   (1) RA preamble transmission: When a UE initiates PRACH transmission via PDCCH or another trigger, the UE transmits a random access (RA) preamble via the PRACH channel.
   (2) Repetition transmission: The PRACH transmission is repeated multiple times based on a configured repetition number. The repetition number is set by the network or by the UE taking into account coverage conditions.
   (3) Use of transmission beam: Multiple PRACH repetitions may be performed using different transmission beams (TX beams). This diversifies paths the signal can reach, thereby increasing the probability of success.
   (4) Reception confirmation: When the base station successfully receives the PRACH signal, a next step of the random access procedure proceeds in response to the signal.
3. Advantages of PRACH Repetition are as follows:
   (1) Improved communication success rate: The likelihood that the base station will successfully receive the PRACH signal increases through the multiple repetition transmissions.
   (2) Coverage Extension: PRACH repetition allows for stable network access over a wider area.
   (3) Improved signal quality: When the signal is weak or there is a lot of interference, PRACH repeated transmission helps overcome signal quality degradation.

Therefore, the PRACH repetition is an important scheme for ensuring a stable connection with the network and is frequently used in conjunction with beamforming, especially in high-frequency bands such as 5G NR.

### RO group for PRACH repetition

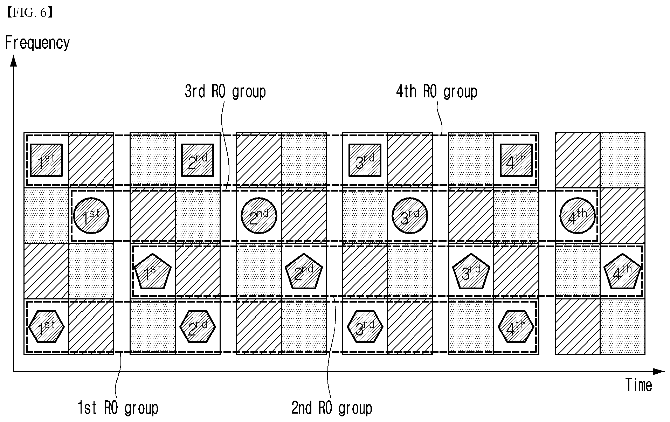

In Rel-18 coverage enhancement of 3GPP standard specification, RACH occasion (RO) groups for physical random access channel (PRACH) repetition were introduced. That is, when a base station configures/indicates N repetition numbers, it is agreed that among valid ROs existing at the same frequency, N ROs will be grouped in ascending order of their time domain indices into an RO group. This is represented graphically in FIGS. 5 and 6. In other words, among valid ROs associated with the same beam, N ROs existing at the same frequency can be grouped into a single RO group.

FIG. 5 illustrates an example of determining an RO group in a system applicable to the present disclosure.

In the example of FIG. 5, the number of repetitions is 4, the number of SSBs is 2, the number of frequency domain multiplexed (FDMed) ROs is 4, and the number of SSBs per RO is 1/2.

FIG. 6 illustrates an example of determining an RO group in a system applicable to the present disclosure.

In the example of FIG. 6, the number of repetitions is 4, the number of SSBs is 3, the number of FDMed ROs is 4, and the number of SSBs per RO is 1.

### PRACH mask index

A PRACH mask index is defined as follows in each of the technical specification (TS) documents 38.212, 38.213, and 38.321 of 3GPP standard specification. In this instance, the PRACH mask index is defined to indicate a specific SSB index to be used for CFRA to the "SS/PBCH index field" when a UE indicates DCI format 1_0 for a PDCCH order, and to indicate a time domain index of RO associated with the SSB index to the "PRACH Mask index field."

### (1) Clause 7.3.1.2.1 of 3GPP TS 38.212

The following information is transmitted by means of the DCI format 1_0 with CRC scrambled by C-RNTI or CS-RNTI or MCS-C-RNTI:
- Identifier for DCI formats - 1 bits
- The value of this bit field is always set to 1, indicating a DL DCI format
- Frequency domain resource assignment - $\left⌈{log}_{2}\left({N}_{RB}^{DL , BWP}\left({N}_{RB}^{DL , BWP}+1\right)/2\right)\right⌉$ bits, where ${N}_{RB}^{DL , BWP}$ is given by clause 7.3.1.0

If the CRC of the DCI format 1_0 is scrambled by C-RNTI and the "Frequency domain resource assignment" field are of all ones, the DCI format 1_0 is for random access procedure initiated by a PDCCH order, with all remaining fields set as follows:
- Random Access Preamble index - 6 bits according to *ra-PreambleIndex* in Clause 5.1.2 of [8, TS38.321]
- If the value of the "Random Access Preamble index" is not all zeros and if the UE is configured with *supplementaryUplink* in *ServingCellConfig* in the cell, this field indicates which UL carrier in the cell to transmit the PRACH according to Table 7.3.1.1.1-1; otherwise, this field is reserved.
- If the value of the "Random Access Preamble index" is not all zeros, this field indicates the SS/PBCH that shall be used to determine the RACH occasion for the PRACH transmission; otherwise, this field is reserved.
- If the value of the "Random Access Preamble index" is not all zeros, this field indicates the RACH occasion associated with the SS/PBCH indicated by "SS/PBCH index" for the PRACH transmission, according to Clause 5.1.1 of [8, TS38.321]; otherwise, this field is reserved.
- 12 bits for operation in a cell with shared spectrum channel access in frequency range 1 or when the DCI format is monitored in common search space for operation in a cell in frequency range 2-2; otherwise 10 bits.

### (2) Clause 8.1 of 3GPP TS 38.213

For a PRACH transmission by a UE triggered by a PDCCH order, the PRACH mask index field [5, TS 38.212], if the value of the random access preamble index field is not zero, indicates the PRACH occasion for the PRACH transmission where the PRACH occasions are associated with the SS/PBCH block index indicated by the SS/PBCH block index field of the PDCCH order. If the UE is provided *K*_{cell,offset} by *cellSpecificKoffset*, the PRACH occasion is after slot *n* + 2*^{µ}* · *K*_{cell,offset} where *n* is the slot of the UL BWP for the PRACH transmission that overlaps with the end of the PDCCH order reception assuming *T*_{TA} = 0, and *µ* is the SCS configuration for the PRACH transmission. If the PDCCH reception for the PDCCH order includes two PDCCH candidates from two linked search space sets based on *searchSpaceLinkingId*, as described in clause 10.1, the last symbol of the PDCCH reception is the last symbol of the PDCCH candidate that ends later. The PDCCH reception includes the two PDCCH candidates also when the UE is not required to monitor one of the two PDCCH candidates as described in clauses 10 (except clause 10.4), 11.1, 11.1.1 and 17.2.

### (3) Clause 7.4 of 3GPP TS 38.321

### 7.4 PRACH Mask Index values

Table 5 below shows 'Table 7.4-1: PRACH Mask Index values' in 3GPP TS 38.321.

**[Table 5]**

| **PRACH Mask Index/ *msgA-SSB-SharedRO-MaskIndex*/ *ssb-SharedRO-MaskIndex*** | **Allowed PRACH occasion(s) of SSB** |
|---|---|
| 0 | All |
| 1 | PRACH occasion index 1 |
| 2 | PRACH occasion index 2 |
| 3 | PRACH occasion index 3 |
| 4 | PRACH occasion index 4 |
| 5 | PRACH occasion index 5 |
| 6 | PRACH occasion index 6 |
| 7 | PRACH occasion index 7 |
| 8 | PRACH occasion index 8 |
| 9 | Every even PRACH occasion |
| 10 | Every odd PRACH occasion |
| 11 | Reserved |
| 12 | Reserved |
| 13 | Reserved |
| 14 | Reserved |
| 15 | Reserved |

### Composition and Method of the Invention

The above-described contents (NR frame structure, RACH, U-Band system, full duplex operation, etc.) can be applied by being combined with methods proposed by the present disclosure described below, or can be supplemented to clarify technical features of methods proposed in the present disclosure.

In addition, methods related to configuration of a PRACH transmission occasion described below are related to uplink transmission and can be equally applied to an uplink signal transmission method in the NR system (licensed band) or the U-Band system (unlicensed band) or the full duplex operation described above. The technical ideas described in the present disclosure can be modified or replaced to suit terms, expressions, structures, etc. defined in each system so that they can be implemented in the corresponding systems.

For example, the uplink transmission through the methods related to configuration of the PRACH transmission occasion described below can be performed in an L-cell and/or a U-cell defined in the NR system or the U-Band system or the full duplex operation.

The Rel-18 coverage enhancement has introduced RO groups for PRACH repetition, and has been defined to form the RO groups using only ROs located at the same frequency.

In addition, in terms of an increase in PRACH coverage, RO groups (i.e., set of valid ROs) were formed using only ROs associated with the same SSB beam index. PRACH repetition using ROs associated with different SSB beam indices was also discussed but was not introduced. Therefore, if the PRACH repetition using ROs associated with different SSB beam indices is introduced in a subsequent release (e.g., Rel-19), it may be necessary to form RO groups using a method different from the currently introduced method.

Accordingly, the present disclosure proposes UE/base station operations required when multiple ROs associated with different SSB beam indices are included in an RO group for PRACH repetition. Although proposed methods and embodiments mentioned in the present disclosure propose to primarily target PRACH repetition using multiple ROs associated with different SSB beam indices, they can also be applied to PRACH repetition using multiple ROs associated with the same SSB beam index, and can also be applied to PRACH repetition, whose part consists of ROs associated with the same SSB beam index, and part consists of ROs associated with different SSB beam indices. PRACH repeated transmission using the same transmission (Tx) beam (or different Tx beams) mentioned in the present disclosure has the same meaning as PRACH repeated transmission using an RO group including ROs associated with the same SSB beam index (or different SSB beam indices). Further, a Tx beam direction of a UE mentioned in the present disclosure has the same meaning as a spatial filter of the UE. The RO group mentioned in the present disclosure has the same meaning as a set of ${N}_{preamble}^{rep}$ valid PRACH occasions in the 3GPP standard specification.

### 1. Higher layer signaling for PRACH repetition with different beams

When a PRACH repetition method using different TX beams is introduced, a base station needs to configure/indicate whether a RACH resource configured for PRACH repetition is a resource for a UE using the same TX beam or a resource for a UE using different TX beams, via higher layer signaling (e.g., SIB, etc.). For example, an explicit parameter may be newly introduced via higher layer signaling (e.g., SIB, etc.) and configured to indicate whether it is a RACH resource for the same TX beam or a RACH resource for different TX beams. For another example, an explicit parameter may be newly introduced vis higher layer signaling (e.g., SIB, etc.) and configured to indicate whether or not it is a RACH resource for different TX beams (or for the same TX beam). Further, if the explicit parameter is not provided via the higher layer signaling (e.g., SIB, etc.), the UE may be configured to determine that the RACH resource is a RACH resource for the same TX beam (or for different TX beams).

If the UE performs PRACH repeated transmission using the different TX beams, a link budget further decreases compared to when the UE performs the PRACH repeated transmission using the same TX beam. Therefore, from the perspective of PRACH coverage enhancement, more repetition numbers may be required when using different TX beams. As a result, the repetition number (or repetition number set) that the base station can configure/indicate when the PRACH repeated transmission is performed using different TX beams may be set differently from the repetition number (or repetition number set) that the base station can configure/indicate when the PRACH repeated transmission is performed using the same TX beam. For example, if the repetition number set that the base station can configure/indicate is {1, 2, 4, 8} for the PRACH repetition using the same TX beam, the repetition number set for the PRACH repetition using the different TX beams may be independently defined as a repetition number set consisting of larger or equal numbers, such as {1, 3, 6, 12}.

Characteristically, as described above, if different repetition number sets are defined for the case where the PRACH repeated transmission is performed using the different TX beams and the case where the PRACH repeated transmission is performed using the same TX beam, the base station may implicitly determine whether the corresponding RACH resource is a resource for the same TX beam or a resource for the different TX beam by using the repetition number(s) configured/indicated by the base station via the higher layer signaling (e.g., SIB, etc.). That is, the UE may determine for itself whether the corresponding RACH resource is a resource for the same TX beam or a resource for the different TX beam based on the repetition number(s) indicated by the base station.

In addition, if the number of different SSB beam indices used by the base station in a specific cell is defined, and the UE intends to perform the PRACH repeated transmission always using different TX beams in a specific RACH attempt, the base station may configure/indicate the repetition number for the PRACH repeated transmission using the different TX beams to be always less than or equal to the number of different SSB beam indices. In other words, the UE may expect the base station to configure/indicate the repetition number value for the PRACH repeated transmission using different TX beams to be always less than or equal to the number of different SSB beam indices used in the cell.

### 2. RO group determination for PRACH repetition with SSB beam indexes

In terms of resource configuration, it may be desirable to separately configure PRACH resources for PRACH repetition with same beam and PRACH resources for PRACH repetition with different beams (e.g., RO level, preamble level, etc.). Otherwise, because a specific preamble within the same PRACH resource can be used for all two repetition transmission schemes (i.e., same beam or different beams), a base station shall perform blind detection for RO groups for the same beam and RO groups for different beams. Therefore, base station complexity increases.

When a PRACH repetition method is introduced using ROs consisting of ROs associated with different SSB beam indices, a method for RO group determination may be required through a separate method different from a method of determining an RO group including ROs associated with the same SSB beam index. A specific method is proposed as follows.

### For single RACH attempt

As a first method, the base station may configure/indicate the number of different TX beams to be applied within a single RACH attempt. For example, the base station may configure/indicate the number of different TX beams to be used per PRACH configuration or per repetition number. In this case, based on the SSB-to-RO mapping configured/indicated through the PRACH configuration and/or the number of different TX beams indicated by the base station, the UE may select multiple ROs associated with different SSB beam indices as many as the repetition number and define the ROs as an RO group.

As another method that the base station can directly indicate, the base station may configure/indicate a starting SSB beam index (S) and the number of SSB beam groups (M) (which can have different combinations of SSB beam indices), in addition to the number of different SSB beam indices (K) to be applied within the single RACH attempt. For example, a total of K SSB beam indices from the SSB beam index S to SSB beam index S+K-1 may be SSB beam group #1, and a total of K SSB beam indices from the SSB beam index S+K to SSB beam index S+2K-1 can be SSB beam group #2. Using this method, a total of M SSB beam groups may be defined. Characteristically, if the base station does not provide the number of SSB beam groups (M) via higher layer signaling, the UE may be defined to construct the SSB beam groups using all the SSB beam indices.

Afterwards, K ROs associated with the K SSB beam indices may be the size of the minimum (unit) RO group. If a repetition number (N) is additionally indicated, the N minimum (unit) RO groups may be selected and used for PRACH repeated transmission. Characteristically, the repetition number may be determined in units of (unit) RO group. For example, if S=1 and K=4, the SSB beam group may include SSB beam indices {1, 2, 3, 4}, {5, 6, 7, 8}, {9, 10, 11, 12}, etc. In this case, when N=3, if the UE selects an SSB beam group including the SSB beam indices {1, 2, 3, 4}, the UE may select three (unit) RO groups including the corresponding SSB beam combination (i.e., {1, 2, 3, 4}) to perform the PRACH repeated transmission. Alternatively, if the repetition number (N) is indicated in units of RO not the (unit) RO group, the value may be defined as a multiple of the value of K, which is the number of different SSB beam indices associated with the (unit) RO group.

Alternatively, the base station may additionally configure/indicate the number of different SSB beam indices (K) to be applied within the single RACH attempt and whether one SSB beam index will be consecutively repeated X times in the RO group. For example, if the starting SSB beam index S=1, the number of different SSB beam indices (K)=2, and X=2, the SSB beam group may include SSB beam indices {1, 1, 2, 2}, {3, 3, 4, 4}, {5, 5, 6, 6}, etc. Or, if the X times are configured to be interleaved, the SSB beam group may include SSB beam indices {1, 2, 1, 2}, {3, 4, 3, 4}, {5, 6, 5, 6}, etc.

As a second method, the base station may pre-define the number of different TX beams to be used per PRACH configuration or per repetition number. In this case, similar to the previous method, the UE may select multiple ROs associated with different SSB beam indices based on the pre-defined information as many as the repetition number to define an RO group.

A third method is a method in which the UE implicitly configures the number of different TX beams based on the number of different SSB beam indices used in the corresponding cell and the repetition number configured/indicated by the base station. For example, if the number of different SSB beam indices (e.g., A) used in the corresponding cell is greater than or equal to the repetition number (e.g., N) configured/indicated by the base station, the UE may be defined to always uses N different TX beams when constructing an RO group for PRACH repetition using the different TX beams. That is, in this case, when the UE determines the ROs for the RO group, the UE may be defined to always select ROs associated with different SSB beam indices as many as the repetition number N and construct the RO group. On the other hand, if the number of different SSB beam indices (e.g., A) used in the corresponding cell is less than the repetition number (e.g., N) configured/indicated by the base station, when the UE constructs an RO group for PRACH repetition using different TX beams, the A different TX beams may be first used, and the remaining N-A TX beams may be wrapped around in the order of the previously selected beams to re-select the corresponding TX beams. That is, in such a case, when the UE determines the RO group, the first A may be selected from ROs associated with different SSB beam indices, and the remaining N-A may be wrapped around in the order of the previously selected SSB beam indices to additionally select ROs associated with the SSB beam indices.

Characteristically, when the UE determines the RO group, it may be defined that the UE uses the same frequency ROs of different time instances (e.g., ROs with the same f_id, or ROs with the same starting RB index). That is, among ROs at the same frequency, the UE may determine the RO group by selecting ROs that are earlier in time from among ROs associated with different SSB beam indices. In this instance, when the UE selects ROs associated with different SSB beam indices for one RO group, it may be defined so that other ROs associated with the same SSB beam index as SSB beam indices associated with the already selected ROs for a specific RO group cannot be included in the corresponding RO group. When the UE determines the RO group, a first valid RO of a first RO group for each frequency location may be defined based on a specific time period (e.g., one or multiple association pattern period(s)) determined by the method defined in the existing 3GPP standard specification.

Additionally, if PRACH resources for PRACH repetition with different beams are allocated based on an RO level and PRACH resources for PRACH repetition with same beam, a specific RO determined as the RO group for the same TX beam may be defined not to be determined as the RO group for the different TX beams. On the other hand, if the PRACH resources for PRACH repetition with different beams share the ROs with the PRACH resources for PRACH repetition with same beam and are allocated based on a preamble level, a specific RO determined as the RO group for the same TX beam may also be determined as the RO group for the different TX beam, but the RO group for the same TX beam and the RO group for the different TX beam are defined as different preamble index groups. That is, if the specific RO is included in both the RO group for the same TX beam and the RO group for the different TX beam, the preamble index groups used for the respective RO groups may be defined not to overlap each other.

### For different RACH attempts

If a UE performs PRACH repeated transmission using different TX beams in a specific RACH attempt and then does not receive a RAR from a base station, when the UE performs PRACH repeated transmission in a subsequent RACH attempt, it is necessary to define whether to maintain the number of different TX beams to the same number as in the previous RACH attempt or to change the number.

First, a method of configuring the number of different TX beams used for each RACH attempt to be the same may be considered. That is, it may be defined so that the number of different TX beams used by a specific UE in a first RACH attempt is maintained until the RACH procedure is completed. Furthermore, in addition to multiple RACH attempts in a specific RACH procedure, when the UE performs PRACH repeated transmission using different TX beams in a specific cell, the number of different TX beams may be defined to be maintained to a specific value configured/indicated by the base station (or determined for the first RO group (among ROs of a specific frequency band) when determining the RO group). In this instance, when the UE determines an RO group using ROs associated with different SSB beam indices based on information received from the base station, it may be defined so that each RO group always includes the same number of ROs associated with different SSB beam indices.

As another method, a method of defining to apply the number of different TX beams used for each RACH attempt as a different value may be considered. For example, if a specific UE performs the PRACH repeated transmission using different TX beams in the first RACH attempt and then does not receive the RAR from the base station, it may be defined that the UE performs the PRACH repeated transmission in the subsequent RACH attempt using a number of different TX beams from that used in the previous RACH attempt. That is, if the UE transmit the PRACH four times (2 times for each TX beam) using a total of two different TX beams in the first RACH attempt, then the UE may transmit the PRACH four times (1 time for each TX beam) in a next RACH attempt using a total of four different TX beams. As above, if the number of TX beams may vary, the base station may configure/indicate these values via higher layer signaling (e.g., SIB), or pre-define them in the 3GPP standard specification. If defined in this way, there is an advantage in that the probability of the UE being indicated in the best beam direction increases by including more TX beams in RACH re-attempt and transmitting them.

Separately from a method of defining the number of different TX beams between specific RACH attempts, it is necessary to define whether to maintain the combination of different TX beam indices to be the same as the previous RACH attempt or to change the number.

First, a method of equally configuring a combination of different TX beam indices used for each RACH attempt may be considered. This method may be used when the number of SSB beam indices used in the corresponding cell is less than or equal to the repetition number configured/indicated by the base station. Characteristically, the combination of TX beam indices may be determined by selecting ROs associated with different SSB beam indices from a first valid RO of a specific time period up to the repetition number when the UE implicitly determines the RO group. In this case, a specific UE may be defined to maintain a combination of different TX beam indices used in the first RACH attempt until the RACH procedure is completed. Furthermore, in addition to multiple RACH attempts in a specific RACH procedure, when the UE performs PRACH repeated transmission using different TX beams in a specific cell, the combination of different TX beam indices may be defined to be maintained to a specific combination configured/indicated by the base station (or pre-determined, or determined through implicit RO group determination). In this case, when the UE determines an RO group using ROs associated with different SSB beam indices based on information received from the base station, it may be defined to include ROs associated with different SSB beam indices so that the different SSB beam indices are equally combined in each RO group.

As another method, a method of defining to apply a combination of different TX beams used for each RACH attempt as a different combination may be considered. Characteristically, this method may be used when the number of SSB beam indices used in the corresponding cell is greater than the repetition number configured/indicated by the base station. For example, if a specific UE performs the PRACH repeated transmission using the combination of TX beam indices in the first RACH attempt and then does not receive the RAR from the base station, it may be defined that the UE performs the PRACH repeated transmission in the subsequent RACH attempt using a different combination of TX beam indices from that used in the previous RACH attempt. Characteristically, it may be defined that TX beam indices not used in the previous RACH attempt are preferentially selected in the current RACH attempt. If there are no more unused TX beam indices, it may be defined that TX beam indices used in the previous RACH attempt are reused. If defined in this way, other TX beam indices that have not been previously selected can be included in RACH re-attempt, which has the advantage of increasing the probability that the UE will be indicated in the best beam direction. If configured in this way, when the UE selects the RO group in a RACH re-attempt situation, the UE may be defined to select an RO group that has many ROs associated with SSB beam indices that have not been included in the previous RACH attempt.

The proposed methods above can be applied when the UE implicitly determines the RO group based on information provided by the base station (e.g., SSB-to-RO mapping, the number of SSB beam indices, the number of PRACH repetitions, the number of TX beams, TX beam combination method, etc.). For example, when the UE constructs the RO group, it may be defined to select ROs associated with each SSB beam index in the order of the SSB beam indices used in the cell, as many as the repetition number. If the RO associated with the last SSB beam index is added but ROs as many as the repetition number are not filled when constructing a specific RO group, the SSB beam index may be wrapped around to re-add the RO associated with a first SSB beam index to construct the RO group. Additionally, it may be defined so that an RO associated with an SSB beam index immediately following an SSB beam index associated with the last RO of a preceding RO group is a first RO of a next RO group.

Additionally, a method may be considered in which a base station explicitly configures/indicates whether to maintain the number of different TX beams between multiple RACH attempts via higher layer signaling. A method may also be considered in which a base station explicitly configures/indicates whether to maintain different combinations of TX beam indices between multiple RACH attempts via higher layer signaling. Characteristically, if no parameter providing the above information is provided, it may be defined that the number of different TX beams between the multiple RACH attempts are maintained, or that different combinations of TX beam indices between the multiple RACH attempts are maintained.

### 3. PRACH repetition with different UE TX beam using multiple ROs associated with same SSB beam index

Although multiple ROs associated with the same SSB beam index are used, a PRACH repetition method using different TX beams may be considered by gradually changing a UE TX beam when a UE actually transmits the ROs. In this case, a process of determining an RO group using multiple ROs associated with the same SSB beam index defined in the 3GPP standard specification may be reused as it is. In this case, an operation of changing the UE TX beam and transmitting it may be supported by the UE implementation, and a base station may receive PRACH preambles without knowing whether the UE transmits the UE TX beam while changing the UE TX beam and may determine that the UE transmits with the same TX beam from the beginning and operate. In this way, the UE may operate regardless of its capability to generate the TX beam.

In this instance, an operation may be considered in which a base station configures/indicates a specific number of ROs in an RO group via higher layer signaling, and defines the specific number of ROs as a subset of the RO group. In this case, in the ROs included in the subset, it may be defined that the UE uses the same TX beam (even if the UE can transmit the TX beam while gradually changing the TX beam). For example, if one RO is included in the subset, the UE may perform PRACH repetition by gradually changing the Tx beam for each of the ROs included in the RO group, and may perform the PRACH repetition using the same Tx beam (without changing the TX beam) for some or all of the ROs. For another example, if two or more ROs are included in the subset, the UE may perform the PRACH repetition using the same Tx beam (without changing the TX beam) in the ROs included in the subset, and perform the PRACH repetition using the same Tx beam (without changing the TX beam) among ROs included in another subset while using a different Tx beam (or using the same TX beam) from the previous subset in the ROs included in the subset. Characteristically, the number of ROs constituting the subset may be defined to be indicated by the divisors of the repetition number. For example, if the repetition number is 2, one of {1, 2} may be configured/indicated as the subset, if the repetition number is 4, one of {1, 2, 4} may be configured/indicated as the subset, and if the repetition number is 8, one of {1, 2, 4, 8} may be configured/indicated as the subset.

If defined in this way, the base station may be defined to select the best beam among the subsets belonging to the RO group and indicate a subset index to the UE through a specific field (or reserved field) of RAR UL grant (or DCI format 0_0 with TC-RNTI). In this instance, a bit width of a corresponding indication field may be first determined, and the number of subsets may be determined by the number of indices that can be represented by the bit width. Hence, the number of ROs constituting the subset may be determined. Alternatively, the base station may indicate the number of ROs included in the subset, and if the total number of subsets is determined based on the repetition number, the bit width of the indication field may be determined. Then, the subset index may be mapped to each state. Alternatively, the base station may indicate the number of subsets instead of a method of indicating the number of ROs included in the subset. (If the number of subsets is indicated, the number of ROs to be included in the subset may be determined based on the repetition number.) Hence, the bit width of the indication field may be determined, and then the subset index may be mapped to each state. Characteristically, locations of the ROs constituting a subset in the RO group may be defined as consecutive ROs in time or defined in the interleaved form in time.

### 4. PRACH repetition with different SSB beam indexes using multiple RO groups

A method may be considered in which a UE performs a process of determining an RO group using multiple ROs associated with the same SSB beam index as defined in the current 3GPP standard specification, and then performs PRACH repeated transmission using multiple different RO groups associated with different SSB beam indices. That is, it may be considered that a base station may configure/indicate the number of different SSB beams for repetition (D) via higher layer signaling, in addition to a repetition factor N used for the PRACH repeated transmission using the same beam. Ultimately, if the base station configures/indicates in this way, in a state in which the RO group used for N repetition transmissions using the same SSB beam index is defined, all D RO groups corresponding to different SSB beam indices may be used to transmit a total of N*D PRACH preambles. In this instance, preamble indices used for the total of N*D PRACH transmissions may be equally configured. For example, if N=2 and D=2, a total of 4 PRACHs may be used for repetition transmission using ROs corresponding to SSB beam index {a, b, a, b}, or a total of 4 PRACHs may be used for repetition transmission using ROs corresponding to SSB beam index {a, a, b, b}. This may be determined based on the order in which ROs are deployed on a specific frequency resource.

Afterwards, since the UE known in advance that N*D PRACH transmissions are performed between the UE and the base station, the UE may understand and operate that an RAR window starts after the last (N*D)th PRACH transmission ends (i.e., after the last OFDM symbol of the last RO). Further, the base station may select the best SSB beam index of one RO group of the D RO groups and indicate it to the UE. This may be configured/indicated using D different RA-RNTI values. That is, D different RA-RNTI values associated with the last ROs of the RO group corresponding to each SSB beam index may be defined, and the base station may select one of the values and use it for CRC scrambling of PDCCH scheduling the RAR UL grant. Then, the UE may configure/indicate the best SSB beam index through blind detection (decoding) using the D different RA-RNTIs. Afterwards, the UE may configure to transmit Msg3 PUSCH using the best SSB beam index configured/indicated by the base station.

Characteristically, the number of different SSB beams for repetition (D) may be configured/indicated when the repetition factor N is 2 or more. Further, if the repetition factor N is 2 or more but the number of different SSB beams for repetition (D) is not provided or is 1, it may be defined to repeatedly transmit N times using ROs associated with the same SSB beam index, as in the existing operation.

The different SSB beam indices may be defined per different TRP index configured within the corresponding cell. In this way, the UE may use different TX beams to transmit to different TRPs when performing PRACH repeated transmission and may expect RAR from each of the different TRPs.

### 5. RO group selection and TX power determination

As in the methods proposed above, when RO groups (or SSB beam groups) including different SSB beam indices are defined (or when a UE can differently transmit TX beams in an RO group including the same SSB beam index), a method of determining an RO group (or SSB beam group) to be selected by the UE may be considered. For example, the UE may be defined to select an RO group (or SSB beam group) with the best RSRP of the best (or worst) SSB beam index in each RO group (or SSB beam group). Or, the UE may be defined to select an RO group (or SSB beam group) with the best average RSRP of all the SSB beam indices in each RO group (or SSB beam group).

When the UE selects a specific RO group (or SSB beam group) to perform multiple PRACH transmissions, a method of determining a PRACH TX power value to be configured per RO associated with different SSB beam indices may be considered. First, as an example of a method of equally configuring the TX power between PRACH repeated transmissions, the UE may be defined to equally configure the PRACH TX power of all the ROs in the group based on a pathloss value of the best (or worst) SSB beam index in each RO group (or SSB beam group). Alternatively, the UE may be defined to equally configure the PRACH TX power of all the ROs in the group based on an average pathloss value of all the SSB beam indices in each RO group (or SSB beam group). In the above, the best SSB beam index may be an SSB beam index with the largest RSRP (or smallest pathloss) among the SSB beam indices associated with the ROs in the RO group. Conversely, the worst SSB beam index may be an SSB beam index with the smallest RSRP (or largest pathloss) among the SSB beam indices associated with the ROs in the RO group.

Next, as an example of a method of independently configuring the TX power between PRACH repeated transmissions, the UE may independently configure the PRACH TX power for each RO associated with each SSB beam index based on a pathloss value of each SSB beam index in each RO group (or SSB beam group), and may define a timing gap between contiguous ROs by taking into account a power transmission loss between PRACH transmissions.

The proposed PRACH repetition methods are applicable to both CFRA and/or CBRA. Also, the aforementioned RO may refer to a valid RO, and the valid RO may be defined to follow the method defined in the existing 3GPP standard specification. Additionally, the proposed method can be configured/applied to other UL signals/channels such as PUSCH/PUCCH. The technology can also be applied to systems that perform the full duplex operation, such as SBFD/SSFD. Since examples of the proposed methods described above can also be included as one of the implementation methods of the present disclosure, it is obvious that they can be considered as a kind of proposed methods. In addition, the proposed methods described above can be implemented independently, but can also be implemented in the form of a combination (or merge) of some proposed methods. Information on whether the proposed methods are applied (or information on rules of the proposed methods) may be defined as a rule so that the base station informs the UE via a predefined signal (e.g., a physical layer signal or a higher layer signal). For example, the higher layer may include one or more of functional layers such as MAC, RLC, PDCP, RRC, and SDAP.

Methods, embodiments, or descriptions for implementing the methods proposed in the present disclosure can be applied separately, or one or more methods (or embodiments or descriptions) can be applied in combination.

### [Description of claims related to UE]

Below, the above-described embodiments are described in detail from an operation perspective of a user equipment (UE) with reference to FIG. 6. Methods to be described below are merely distinguished for convenience of explanation. Thus, as long as the methods are not mutually exclusive, it is obvious that partial configuration of any method can be substituted or combined with partial configuration of another method.

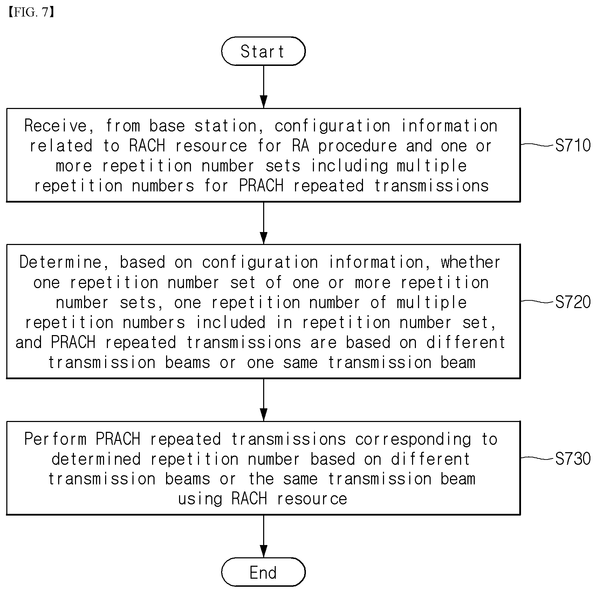

FIG. 7 illustrates an example of an operation process of a UE in a system applicable to the present disclosure.

In step S710, a user equipment (UE) receives, from a base station (BS), configuration information related to i) a random access channel (RACH) resource for a random access (RA) procedure and ii) one or more repetition number sets including multiple repetition numbers for physical random access channel (PRACH) repeated transmissions.

In step S720, the UE determines, based on the configuration information, whether one repetition number set of the one or more repetition number sets, one repetition number of the multiple repetition numbers included in the repetition number set, and the PRACH repeated transmissions are based on different transmission beams or one same transmission beam.

In step S730, the UE performs the PRACH repeated transmissions corresponding to the determined repetition number based on the different transmission beams or the same transmission beam using the RACH resource.

The different transmission beams are related to different synchronization signal blocks (SSBs) or different reference signals (RSs), and the same transmission beam is related to one SSB or one RS.

According to various embodiments of the present disclosure, if the PRACH repeated transmissions are performed based on the different transmission beams, the PRACH repeated transmissions may be based on a transmission power that is equally configured based on a pathloss of a best beam with a best received signal received power (RSRP) or a worst beam with a worst RSRP among the different transmission beams.

According to various embodiments of the present disclosure, the one or more repetition number sets may include a first repetition number set in which the PRACH repeated transmissions are based on the different transmission beams, and a second repetition number set in which the PRACH repeated transmissions are based on the same transmission beam.

According to various embodiments of the present disclosure, first repetition numbers included in the first repetition number set may be greater than or equal to second repetition numbers included in the second repetition number set.

According to various embodiments of the present disclosure, an embodiment of FIG 7 may further comprise receiving, from the base station, a higher layer signaling including indication information indicating whether the PRACH repeated transmissions are based on the different transmission beams or the same transmission beam, and indication information of a specific repetition number included in the first repetition number set or the second repetition number set. The PRACH repeated transmissions may be performed based on the higher layer signaling.

According to various embodiments of the present disclosure, the one or more repetition number sets may be one repetition number set. When higher layer signaling including indication information indicating whether the PRACH repeated transmissions are based on the different transmission beams is received from the base station, the PRACH repeated transmissions may be performed based on the different transmission beams. When the higher layer signaling is not received from the base station, the PRACH repeated transmissions may be performed based on the same transmission beam.

According to various embodiments of the present disclosure, the one or more repetition number sets may be one repetition number set. When higher layer signaling including indication information indicating whether the PRACH repeated transmissions are based on the same transmission beam is received from the base station, the PRACH repeated transmissions may be performed based on the same transmission beam. When the higher layer signaling is not received from the base station, the PRACH repeated transmissions may be performed based on the different transmission beams.

According to various embodiments of the present disclosure, there is provided a user equipment (UE) in a wireless communication system. The UE may include a transceiver and at least one processor, and the at least one processor may be configured to perform the operation method of the UE based on FIG. 7.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 7 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the UE based on FIG. 7.

### [Description of claims related to base station]

Below, the above-described embodiments are described in detail from a perspective of an operation of a base station with reference to FIG. 7. Methods to be described below are merely distinguished for convenience of explanation. Thus, as long as the methods are not mutually exclusive, it is obvious that partial configuration of any method can be substituted or combined with partial configuration of another method.

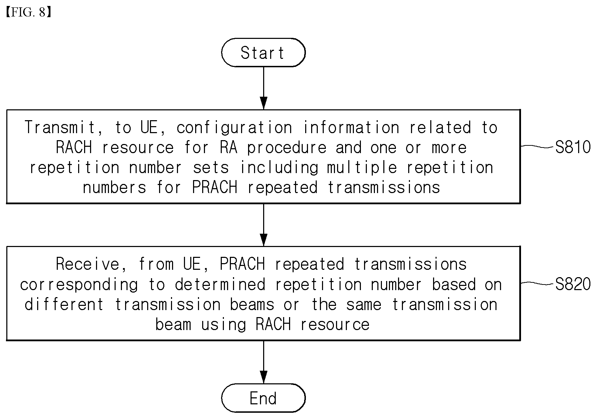

FIG. 8 illustrates an example of an operation process of a base station in a system applicable to the present disclosure.

In step S810, a base station (BS) transmits, to a user equipment (UE), configuration information related to i) a random access channel (RACH) resource for a random access (RA) procedure and ii) one or more repetition number sets including multiple repetition numbers for physical random access channel (PRACH) repeated transmissions.

Based on the configuration information, it is determined whether one repetition number set of the one or more repetition number sets, one repetition number of the multiple repetition numbers included in the repetition number set, and the PRACH repeated transmissions are based on different transmission beams or one same transmission beam.

In step S820, the base station receives, from the UE, the PRACH repeated transmissions corresponding to the determined repetition number based on the different transmission beams or the same transmission beam using the RACH resource.

The different transmission beams are related to different synchronization signal blocks (SSBs) or different reference signals (RSs), and the same transmission beam is related to one SSB or one RS.

According to various embodiments of the present disclosure, if the PRACH repeated transmissions are received based on the different transmission beams, the PRACH repeated transmissions may be based on a transmission power that is equally configured based on a pathloss of a best beam with a best received signal received power (RSRP) or a worst beam with a worst RSRP among the different transmission beams.

According to various embodiments of the present disclosure, the one or more repetition number sets may include a first repetition number set in which the PRACH repeated transmissions are based on the different transmission beams, and a second repetition number set in which the PRACH repeated transmissions are based on the same transmission beam.

According to various embodiments of the present disclosure, first repetition numbers included in the first repetition number set may be greater than or equal to second repetition numbers included in the second repetition number set.

According to various embodiments of the present disclosure, an embodiment of FIG 8 may further comprise transmitting, to the UE, a higher layer signaling including indication information indicating whether the PRACH repeated transmissions are based on the different transmission beams or the same transmission beam, and indication information of a specific repetition number included in the first repetition number set or the second repetition number set. The PRACH repeated transmissions may be received based on the higher layer signaling.

According to various embodiments of the present disclosure, the one or more repetition number sets may be one repetition number set. When higher layer signaling including indication information indicating whether the PRACH repeated transmissions are based on the different transmission beams is transmitted to the UE, the PRACH repeated transmissions may be received based on the different transmission beams. When the higher layer signaling is not transmitted to the UE, the PRACH repeated transmissions may be received based on the same transmission beam.

According to various embodiments of the present disclosure, one or more repetition number sets may be one repetition number set. When higher layer signaling including indication information indicating whether the PRACH repeated transmissions are based on the same transmission beam is transmitted to the UE, the PRACH repeated transmissions may be received based on the same transmission beam. When the higher layer signaling is not transmitted to the UE, the PRACH repeated transmissions may be received based on the different transmission beams.

According to various embodiments of the present disclosure, there is provided a base station in a wireless communication system. The base station may include a transceiver and at least one processor, and the at least one processor may be configured to perform the operation method of the base station based on FIG. 8.

According to various embodiments of the present disclosure, there is provided a device controlling a base station in a wireless communication system. The device may include at least one processor and at least one memory operably connected to the at least one processor. The at least one memory may be configured to store instructions performing the operation method of the base station based on FIG. 8 based on being executed by the at least one processor.

According to various embodiments of the present disclosure, there are provided one or more non-transitory computer readable mediums (CRMs) storing one or more instructions. The one or more instructions may be configured to perform operations based on being executed by one or more processors, and the operations may include the operation method of the base station based on FIG. 8.

### Wireless device applicable to the present disclosure

Examples of wireless devices to which various embodiments of the present disclosure are applied are described below.

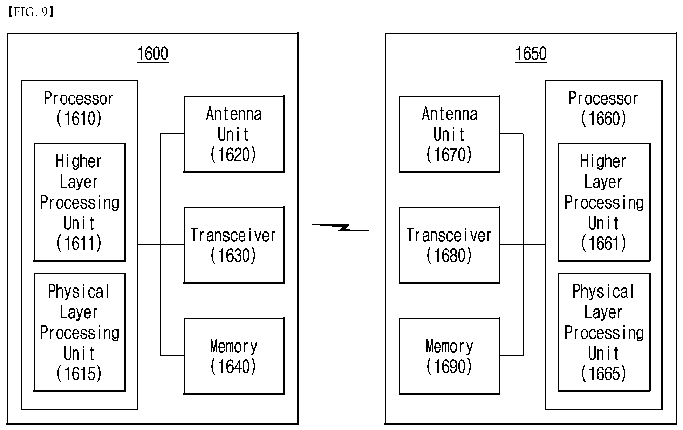

FIG. 9 illustrates an example of a structure of a first device and a second device in a system applicable to the present disclosure.

A first device 1600 may include a processor 1610, an antenna unit 1620, a transceiver 1630, and a memory 1640.

The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.

The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.

The processor 1610 of the first device 1600 may be configured to implement the operation of the BS in the BS-UE communication (or the operation of the first UE device in the inter-UE communication) in embodiments described in the present disclosure.

The second device 1650 may include a processor 1660, an antenna unit 1670, a transceiver 1680, and a memory 1690.

The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.

The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.

The processor 1660 of the second device 1650 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.

Wireless communication technologies implemented in the devices 1600 and 1650 according to the present disclosure may include LTE, NR, and 6G, as well as various other wireless communication technologies.

The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

## Claims

1. A method performed by a user equipment (UE), the method comprising:
receiving, from a base station, configuration information related to i) a random access channel (RACH) resource for a random access (RA) procedure and ii) one or more repetition number sets including multiple repetition numbers for physical random access channel (PRACH) repeated transmissions;
determining, based on the configuration information, whether one repetition number set of the one or more repetition number sets, one repetition number of the multiple repetition numbers included in the repetition number set, and the PRACH repeated transmissions are based on different transmission beams or one same transmission beam; and
performing the PRACH repeated transmissions corresponding to the determined repetition number based on the different transmission beams or the same transmission beam using the RACH resource,
wherein the different transmission beams are related to different synchronization signal blocks (SSBs) or different reference signals (RSs), and the same transmission beam is related to one SSB or one RS.

2. The method of claim 1, wherein based on the PRACH repeated transmissions being performed based on the different transmission beams, the PRACH repeated transmissions are based on a transmission power that is equally configured based on a pathloss of a best beam with a best received signal received power (RSRP) or a worst beam with a worst RSRP among the different transmission beams.

3. The method of claim 1, wherein the one or more repetition number sets include:
a first repetition number set in which the PRACH repeated transmissions are based on the different transmission beams; and
a second repetition number set in which the PRACH repeated transmissions are based on the same transmission beam.

4. The method of claim 3, wherein first repetition numbers included in the first repetition number set are greater than or equal to second repetition numbers included in the second repetition number set.

5. The method of claim 3, further comprising:
receiving, from the base station, a higher layer signaling including indication information indicating whether the PRACH repeated transmissions are based on the different transmission beams or the same transmission beam, and indication information of a specific repetition number included in the first repetition number set or the second repetition number set,
wherein the PRACH repeated transmissions are performed based on the higher layer signaling.

6. The method of claim 1, wherein the one or more repetition number sets are one repetition number set, and
wherein based on a higher layer signaling including indication information indicating whether the PRACH repeated transmissions are based on the different transmission beams being received from the base station, the PRACH repeated transmissions are performed based on the different transmission beams, and
wherein based on the higher layer signaling being not received from the base station, the PRACH repeated transmissions are performed based on the same transmission beam.

7. The method of claim 1, wherein the one or more repetition number sets are one repetition number set,
wherein based on a higher layer signaling including indication information indicating whether the PRACH repeated transmissions are based on the same transmission beam being received from the base station, the PRACH repeated transmissions are performed based on the same transmission beam, and
wherein based on the higher layer signaling being not received from the base station, the PRACH repeated transmissions are performed based on the different transmission beams.

8. A method performed by a base station, the method comprising:
transmitting, to a user equipment (UE), configuration information related to i) a random access channel (RACH) resource for a random access (RA) procedure and ii) one or more repetition number sets including multiple repetition numbers for physical random access channel (PRACH) repeated transmissions,
wherein based on the configuration information, it is determined whether one repetition number set of the one or more repetition number sets, one repetition number of the multiple repetition numbers included in the repetition number set, and the PRACH repeated transmissions are based on different transmission beams or one same transmission beam; and
receiving, from the UE, the PRACH repeated transmissions corresponding to the determined repetition number based on the different transmission beams or the same transmission beam using the RACH resource,
wherein the different transmission beams are related to different synchronization signal blocks (SSBs) or different reference signals (RSs), and the same transmission beam is related to one SSB or one RS.

9. The method of claim 8, wherein based on the PRACH repeated transmissions being received based on the different transmission beams, the PRACH repeated transmissions are based on a transmission power that is equally configured based on a pathloss of a best beam with a best received signal received power (RSRP) or a worst beam with a worst RSRP among the different transmission beams.

10. The method of claim 8, wherein the one or more repetition number sets include:
a first repetition number set in which the PRACH repeated transmissions are based on the different transmission beams; and
a second repetition number set in which the PRACH repeated transmissions are based on the same transmission beam.

11. The method of claim 10, wherein first repetition numbers included in the first repetition number set are greater than or equal to second repetition numbers included in the second repetition number set.

12. The method of claim 10, further comprising:
transmitting, to the UE, a higher layer signaling including indication information indicating whether the PRACH repeated transmissions are based on the different transmission beams or the same transmission beam, and indication information of a specific repetition number included in the first repetition number set or the second repetition number set,
wherein the PRACH repeated transmissions are performed based on the higher layer signaling.

13. The method of claim 8, wherein the one or more repetition number sets are one repetition number set, and
wherein based on a higher layer signaling including indication information indicating whether the PRACH repeated transmissions are based on the different transmission beams being transmitted to the UE, the PRACH repeated transmissions are received based on the different transmission beams, and
wherein based on the higher layer signaling being not transmitted to the UE, the PRACH repeated transmissions are received based on the same transmission beam.

14. The method of claim 8, wherein the one or more repetition number sets are one repetition number set,
wherein based on a higher layer signaling including indication information indicating whether the PRACH repeated transmissions are based on the same transmission beam being transmitted to the UE, the PRACH repeated transmissions are received based on the same transmission beam, and
wherein based on the higher layer signaling being not transmitted to the UE, the PRACH repeated transmissions are received based on the different transmission beams.

15. A user equipment (UE) in a wireless communication system, the UE comprising:
a transceiver;
at least one processor; and
at least one memory operably connectable to the at least one processor and storing instructions performing operations based on being executed by the at least one processor,
wherein the operations comprise all steps of a method according to any one of claims 1 to 7.

16. A base station in a wireless communication system, the base station comprising:
a transceiver;
at least one processor; and
at least one memory operably connectable to the at least one processor and storing instructions performing operations based on being executed by the at least one processor,
wherein the operations comprise all steps of a method according to any one of claims 8 to 14.

17. A control device controlling a user equipment in a wireless communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 1 to 7.

18. A control device controlling a base station in a wireless communication system, the control device comprising:
at least one processor; and
at least one memory operably connected to the at least one processor,
wherein the at least one memory stores instructions performing operations based on being executed by the at least one processor, and
wherein the operations comprise all steps of a method according to any one of claims 8 to 14.

19. One or more non-transitory computer readable mediums storing one or more instructions,
wherein the one or more instructions perform operations based on being executed by one or more processors, and
wherein the operations comprise all steps of a method according to any one of claims 1 to 7.

20. One or more non-transitory computer readable mediums storing one or more instructions,
wherein the one or more instructions perform operations based on being executed by one or more processors, and
wherein the operations comprise all steps of a method according to any one of claims 8 to 14.
